# EUROPEAN PATENT SPECIFICATION

(11) **EP 4 271 688 B1**
(45) Date of publication and mention of the grant of the patent: **21.01.2026**
(21) Application number: 21783310.2
(22) Date of filing: 01.10.2021
(51) Int. Cl.: C07G 1/00, C07B 33/00, C03C 13/06, C08H 7/00, C08L 97/00, D04H 1/4209

(54) **SOLID STATE BINDER**
FESTSTOFFBINDEMITTEL
LIANT À L'ÉTAT SOLIDE

(30) Priority: 30.12.2020 WO PCT/EP2020/088061
(43) Date of publication of application: 08.11.2023
(73) Proprietor: ROCKWOOL A/S, 2640 Hedehusene (DK)
(72) Inventor: BARTNIK JOHANSSON, Dorte, 2640 Hedehusene (DK); NIKOLIC, Miroslav, 2640 Hedehusene (DK)
(74) Representative: Gill Jennings & Every LLP
(86) International application number: PCT/EP2021/077193
(87) International publication number: WO 2022/144112

(56) References cited:
- US-A- 3 923 532
- US-A1- 2018 201 542
- US-B2- 10 435 329

## Description

### Field of the Invention

The present invention relates to a binder for mineral fibre products, a method of producing a bonded mineral fibre product using said binder. Also dislosed is a mineral fibre product comprising mineral fibres in contact with the cured binder.

### Background of the Invention

Mineral wool products (also termed mineral fibre products) generally comprise man-made vitreous fibres (MMVF) such as, e.g., glass fibres, ceramic fibres, basalt fibres, slag fibres, mineral fibres and stone fibres (rock fibres), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process.

The binder material may be applied to the mineral fibres immediately after the fibres are formed. Alternatively, the binder material is applied to the mineral fibres in an off-line process separate from the fibre forming process. The binder material in the latter case is traditionally a solid-state binder which is not in a diluted aqueous solution. Such binders are also referred to as dry binders.

Mineral fibre products with dry binders are formed by mixing the mineral fibres and the binder material to form a mixture and applying heat and pressure to the mixture in a plate press apparatus to provide a cured mineral fibre product.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines.

Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up.

Since some of the starting materials used in the production of the known binders are rather expensive chemicals, there is an ongoing need to provide phenol free and formaldehyde free binders which are economically produced and at the same time show good bonding properties for producing a bonded mineral fibre product. A further desire is directed to binders which are phenol free.

A further effect in connection with previously known binder compositions from mineral fibres is that at least the majority of the starting materials used for the productions of these binders stem from fossil fuels. There is an ongoing trend of consumers to prefer products that are at least partly produced from renewable materials and there is therefore a need to provide binders for mineral wool which are at least partly produced from renewable materials.

A further effect in connection with previously known binder compositions for mineral fibres is that they involve components which are harmful. Emissions from the production when using phenol and formaldehyde containing binders is also a problem regarding health aspects. This requires safety measures for the persons in the working environment leading to increased costs and health issues and there is therefore a need to provide binder compositions for mineral fibres with a reduced content of harmful materials.

In the meantime, a number of binders for mineral fibres have been provided, which are to a large extent based on renewable starting materials. In many cases these binders based to a large extent on renewable resources are also formaldehyde-free.

However, many of these binders are still comparatively expensive because they are based on comparatively expensive basic materials.

### Summary of the Invention

Accordingly, it was an object of the present invention to provide a binder composition, which is particularly suitable for bonding mineral fibres, has a reduced content of harmful materials and emissions, is comparatively inexpensive to produce, has a good storability, shows good properties for bonding mineral fibre products and is including renewable materials as starting products. The binder should be suitable to prepare high-density mineral fibre products or hard plates, respectively. The binder should be formaldehyde-free and possibly also free of phenol.

In accordance with a first aspect of the present invention, there is provided a solid state binder composition, in particular a formaldehyde-free, solid state binder composition, comprising:
- a component (i) in form of one or more
   lignosulfonate lignins having a carboxylic acid group content of 0.03 to 1.4 mmol/g, based on the dry weight of the lignosulfonate lignins,
- a component (ii) in form of one or more cross-linkers.

In accordance with a second aspect of the present invention, there is provided a method of producing a bonded mineral fibre product which comprises the steps of contacting the mineral fibres with the solid state binder composition defined above and curing the binder composition in contact with the mineral fibres.

Also disclosed herein is a mineral fibre product, comprising mineral fibres in contact with the cured solid state binder composition defined above, preferably obtainable by the method defined above.

In accordance with a forth aspect of the present invention, the solid state binder composition defined above is used as a binder for mineral fibres or as a glue to adhere components with each other.

In a further embodiment, the binder composition further comprises
- a component (iii) in form of one or more plasticizers.

The present inventors have surprisingly found that it is possible to prepare a binder composition for mineral fibres that is based on the combination of the components (i) and (ii) and optionally component (iii) defined above. It is highly surprising that by the combination of these components, solid state binder compositions can be prepared which are suitable for bonding mineral fibres.

Moreover, the binder composition can be produced from inexpensive renewable materials to a large degree, does not contain, or contains only to a minor degree, any corrosive and/or harmful agents. At the same time, components can be used which have a comparatively low price. The combination of the low price aspect and the stemming from renewable resources aspect is particularly remarkable, since "biomaterials" are often more expensive than conventional materials.

It is further surprising that a binder composition based on the combination of said components can be used as a solid state binder.

At the same time, the binders according to the present invention show excellent properties when used for binding mineral fibres. The mechanical strength has an unexpected high level when subjected to ageing conditions.

The reaction loss from curing achieved with binders according to aspects of the present invention is on the same level or higher than the reaction loss for reference binder.

### Description of the Preferred Embodiments

The solid state binder composition according to the present invention comprises:
- a component (i) in form of one or more
   lignosulfonate lignins having a carboxylic acid group content of 0.03 to 1.4 mmol/g, based on the dry weight of the lignosulfonate lignins,
- a component (ii) in form of one or more cross-linkers.
- optionally a component (iii) in form of one or more plasticizers.

In particular, in accordance with a first aspect of the present invention, there is provided a solid state binder comprising:
- a component (i) in form of one or more
   lignosulfonate lignins having a carboxylic acid group content of 0.03 to 2.0 mmol/g, such as 0.03 to 1.4 mmol/g, such as 0.075 to 2.0 mmol/g, such as 0.075 to 1.4 mmol/g, based on the dry weight of the lignosulfonate lignins,
- a component (ii) in form of one or more cross-linkers;
- optionally a component (iii) in form of one or more plasticizers,
with the proviso that the binder composition does not comprise a cross-linker selected from
- epoxy compounds having a molecular weight M_{W} of 500 or less.

In particular, in accordance with a first aspect of the present invention, there is provided a solid state binder comprising:
- a component (i) in form of one or more
   lignosulfonate lignins having a carboxylic acid group content of 0.03 to 2.0 mmol/g, such as 0.03 to 1.4 mmol/g, such as 0.075 to 2.0 mmol/g, such as 0.075 to 1.4 mmol/g, based on the dry weight of the lignosulfonate lignins,
- a component (ii) in form of one or more cross-linkers;
- optionally a component (iii) in form of one or more plasticizers,
with the proviso that the binder composition does not comprise a cross-linker selected from
- carbonyl compounds selected from aldehydes, carbonyl compounds of the formula R-[C(O)R₁]ₓ
   in which:
   R represents a saturated or unsaturated and linear, branched or cyclic hydrocarbon radical, a radical including one or more aromatic nuclei which consist of 5 or 6 carbon atoms, a radical including one or more aromatic heterocycles containing 4 or 5 carbon atoms and an oxygen, nitrogen or sulfur atom, it being possible for the R radical to contain other functional groups,
   R₁ represents a hydrogen atom or a C₁-C₁₀ alkyl radical, and
   x varies from 1 to 10.

In particular, in accordance with a first aspect of the present invention, there is provided a solid state binder comprising:
- a component (i) in form of one or more
   lignosulfonate lignins having a carboxylic acid group content of 0.03 to 2.0 mmol/g, such as 0.03 to 1.4 mmol/g, such as 0.075 to 2.0 mmol/g, such as 0.075 to 1.4 mmol/g, based on the dry weight of the lignosulfonate lignins,
- a component (ii) in form of one or more cross-linkers;
- optionally a component (iii) in form of one or more plasticizers,
with the proviso that the binder composition does not comprise a cross-linker selected from
- polyamines.

In particular, in accordance with a first aspect of the present invention, there is provided a solid state binder comprising:
- a component (i) in form of one or more
   lignosulfonate lignins having a carboxylic acid group content of 0.03 to 2.0 mmol/g, such as 0.03 to 1.4 mmol/g, such as 0.075 to 2.0 mmol/g, such as 0.075 to 1.4 mmol/g, based on the dry weight of the lignosulfonate lignins,
- a component (ii) in form of one or more cross-linkers;
- optionally a component (iii) in form of one or more plasticizers,
with the proviso that the binder composition does not comprise a cross-linker selected from
- mono- and oligosaccharides.

In one embodiment, the solid state binder comprises:
- a component (i) in form of one or more
   lignosulfonate lignins having a carboxylic acid group content of 0.03 to 2.0 mmol/g, such as 0.03 to 1.4 mmol/g, such as 0.075 to 2.0 mmol/g, such as 0.075 to 1.4 mmol/g, based on the dry weight of the lignosulfonate lignins,
- a component (ii) in form of one or more cross-linkers selected from
   - β-hydroxyalkylamide-cross-linkers, and/or
   - epoxy compounds having a molecular weight of more than 500, such as an epoxidised oil based on fatty acid triglyceride or one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, and/or
   - one or more cross-linkers in form of multifunctional carbodiimides, such as aliphatic multifunctional carbodiimides; and/or
   - Primid XL-552;
- optionally a component (iii) in form of one or more plasticizers,
with the proviso that the binder composition does not comprise a cross-linker selected from
- epoxy compounds having a molecular weight M_{W} of 500 or less
- carbonyl compounds selected from aldehydes, carbonyl compounds of the formula R-[C(O)R₁]ₓ
   in which:
   R represents a saturated or unsaturated and linear, branched or cyclic hydrocarbon radical, a radical including one or more aromatic nuclei which consist of 5 or 6 carbon atoms, a radical including one or more aromatic heterocycles containing 4 or 5 carbon atoms and an oxygen, nitrogen or sulfur atom, it being possible for the R radical to contain other functional groups,
   R₁ represents a hydrogen atom or a C₁-C₁₀ alkyl radical, and
   x varies from 1 to 10,
- polyamines.

In a preferred embodiment, the solid state binder composition according to the present invention, and the mineral fibre products obtained therefrom, respectively, are formaldehyde free.

For the purpose of the present application, the term "formaldehyde free" is defined to characterize a mineral wool product where the emission is below 5 µg/m²/h of formaldehyde from the mineral wool product, preferably below 3 µg/m²/h. Preferably, the test is carried out in accordance with ISO 16000 for testing aldehyde emissions.

Preferably, the binder composition does not contain added formaldehyde. The solid state binder composition according to the present invention, and the mineral fibre products obtained therefrom, respectively, may be phenol free or have a relatively low phenol content.

In one embodiment, the binder composition does not contain added formaldehyde.

In one embodiment, the binder composition does not contain added phenol.

For the purpose of the present invention, the term "mono- and oligosaccharides" is defined to comprise monosaccharides and oligosaccharides having 10 or less saccharide units.

For the purpose of the present invention, the term "sugar" is defined to comprise monosaccharides and oligosaccharides having 10 or less saccharide units.

In a preferred embodiment, the solid state binder composition according to the present invention has a water content, calculated as the weight of water in relation to the weight of the total solid state binder, of ≤ 30 %, in particular ≤ 25 %, more preferably ≤ 10 %.

The water content in the solid state binder composition can be determined based on the weight of water that evaporates at 105 °C in 1 hour at ambient pressure from the binder.

The binder composition of the present invention is a binder composition in a solid state. In a preferred embodiment, the solid state binder composition of the present invention is in form of a powder. The solid state binder composition generally refers to an uncured binder composition, unless otherwise stated.

Preferably, 50 wt. % of the components of the solid state binder composition has a particle size of less than 500 µ, such as less than 200 µ, such as less than 100 µ and more than 10 µ, such as more than 20 µ, such as more than 25 µ.

The definition of the particle size is carried out by applying the binder to a screen for which the mesh width is the particle size to determined, e.g. 200 µ. The particles recovered after the screening thus has a particle size of less than or equal to 200 µ. Thereafter, the wt. % screened can be determined.

In a preferred embodiment, component (i) is having a carboxylic acid group content of 0.05 to 0.6 mmol/g, based on the dry weight of lignosulfonate lignins.

In a preferred embodiment, the solid state binder composition of the present invention is a free-flowing binder composition.

In one embodiment the solid state binder composition is able to flow out of a model silo in a mass flow pattern, said model silo having stainless steel walls with a circular hopper, a hopper angle of 30°, and a hopper opening diameter of 20 cm.

A suitable test for determining whether a sample of binder is "free-flowing" is to determine whether the binder is able to flow out of a standardised hopper in a mass flow pattern. The term "mass flow" is known in the art of silo design and refers to the fact that the whole contents of a silo is in movement when product is withdrawn from the bottom of the silo, i.e. the "first in - first out" principle applies to the flow, which is regular and easily controllable. A less desirable flow pattern is "core flow" or "funnel flow", where the product flows through the core of the silo, so that stagnant zones where product is at rest are found along the wall areas of the silo. The presence of mass flow depends on the internal friction of the product, the wall friction, the hopper shape, the hopper angle and the si ze of the hopper opening. For a given hopper, the "mass flow angle", which is the angle of the hopper (to the vertical) where mass flow can still occur, may be calculated (when the internal friction and wall friction are known) or determined empirically. At angles greater than the mass flow angle, i.e. less steep hoppers, funnel flow will occur.

To test the flow properties of a sample of binder, a model silo having stainless steel walls with a round hopper, a hopper angle of 30°, and a hopper opening diameter of 20 cm may be employed. For testing, the silo is filled to a minimum fill level of 30 cm above the transition from the silo to the hopper, and a maximum fill level of not more than 3 m. When filling a completely empty silo, a small quantity of the binder (e.g. about 5 liters) should be withdrawn once the fill level reaches the transition, so as to avoid a "bridging" effect caused by binder at the bottom of the silo being subjected to a higher pressure. Product should be withdrawn evenly over the entire area of the opening. Using such a standard hopper, binder is defined as "free-flowing" if it is able to flow out of the hopper in a mass flow pattern. Non-free flowing binder, on the other hand, will - if it is able to flow out of the hopper at all - flow in a funnel flow pattern. The flow pattern in any given case can readily be determined by visual observation.

Preferably, the free-flowing binder also flow in a mass flow pattern using the same type of hopper and the same procedure, but with a hopper opening diameter of 15 cm.

### Component (i)

Component (i) is in form of one or more lignosulfonate lignins having a carboxylic acid group content of 0.03 to 2.0 mmol/g, such as 0.03 to 1.4 mmol/g, such as 0.075 to 2.0 mmol/g, such as 0.075 to 1.4 mmol/g, based on the dry weight of the lignosulfonate lignins.

Lignin, cellulose and hemicellulose are the three main organic compounds in a plant cell wall. Lignin can be thought of as the glue, that holds the cellulose fibres together. Lignin contains both hydrophilic and hydrophobic groups. It is the second most abundant natural polymer in the world, second only to cellulose, and is estimated to represent as much as 20-30% of the total carbon contained in the biomass, which is more than 1 billion tons globally.

The lignosulfonate process introduces large amount of sulfonate groups making the lignin soluble in water but also in acidic water solutions. Lignosulfonates has up to 8% sulfur as sulfonate, whereas kraft lignin has 1-2% sulfur, mostly bonded to the lignin. The molecular weight of lignosulfonate is 15.000-50.000 g/mol. The typical hydrophobic core of lignin together with large number of ionized sulfonate groups make this lignin attractive as a surfactant and it often finds application in dispersing cement etc.

To produce lignin-based value-added products, lignin should be first separated from biomass, for which several methods can be employed. Kraft and sulfite pulping processes are known for their effective lignin separation from wood, and hence, are used worldwide. Kraft lignin is separated from wood with the help of NaOH and Na2S. Lignins from sulfite pulping processes are denoted as lignosulfonates, and are produced by using sulfurous acid and/or a sulfite salt containing magnesium, calcium, sodium, or ammonium at varying pH levels. Currently, lignosulfonates account for 90 % of the total market of commercial lignin, and the total annual worldwide production of lignosulfonates is approximately 1.8 million tons. Lignosulfonates have generally abundance of sulfonic groups, and thus, a higher amount of sulfur than kraft lignin. Due to the presence of the sulfonated group, lignosulfonates are anionically charged and water soluble. The molecular weights (Mw) of lignosulfonates can be similar to or larger than that of kraft lignin. Due to their unique properties, lignosulfonates have a wide range of uses, such as animal feed, pesticides, surfactants, additives in oil drilling, stabilizers in colloidal suspensions, and as plasticizers in concrete admixtures. However, the majority of new pulp mills employ kraft technology for pulp production, and thus, kraft lignin is more readily available for value-added production.

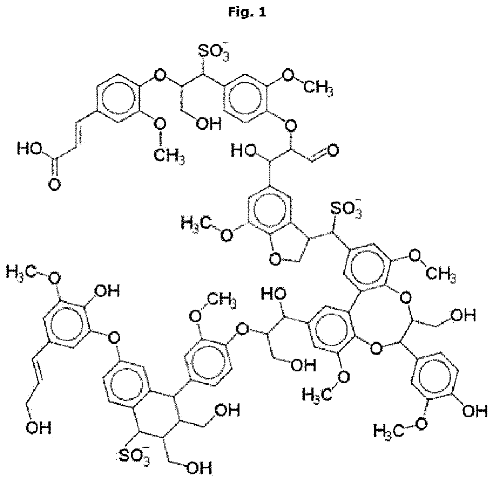

However, lignosulfonates and kraft lignin have different properties coming from different isolation processes and thus distribution of functional groups. High level of sulfonic groups in lignosulfonates, generally at least one for every four C9 units, makes lignosulfonates strongly charged at all pH levels in water. This abundance of ionisable functional groups can explain most of the differences compared to other technical lignins. Higher charge density allows easier water solubility and higher solid content in solution possible compared to kraft lignin. Also, for the same reason, lignosulfonates will have lower solution viscosity compared to kraft lignin at the same solid content which can facilitate handling and processing. Commonly used model structure of lignosulfonates is shown on Figure 1.

In one embodiment, component (i) is having a carboxylic acid group content of 0.05 to 0.6 mmol/g, such as 0.1 to 0.4 mmol/g, based on the dry weight of lignosulfonate lignins.

In one embodiment, component (i) is in form of one or more lignosulfonate lignins having an average carboxylic acid group content of less than 1.8 groups per macromolecule considering the M_n wt. average of component (i), such as less than 1.4 such as less than 1.1 such as less than 0.7 such as less than 0.4.

In one embodiment, component (i) is having a content of phenolic OH groups of0.3 to 2.5 mmol/g, such as 0.5 to 2.0 mmol/g, such as 0.5 to 1.5 mmol/g. based on the dry weight of lignosulfonate lignins.

In one embodiment, component (i) is having a content of aliphatic OH groups of1.0 to 8.0 mmol/g, such as 1.5 to 6.0 mmol/g, such as 2.0 to 5.0 mmol/g, based on the dry weight of lignosulfonate lignins.

In one embodiment, component (i) comprises ammoniumlignosulfonates and/or calciumlignosulfonates, and/or magnesiumlignosulfonates, and any combinations thereof.

In one embodiment, component (i) comprises ammoniumlignosulfonates and calciumlignosulfonates, wherein the molar ratio of NH₄⁺ to Ca²⁺ is in the range of 5:1 to 1:5, in particular 3:1 to 1:3.

For the purpose of the present invention, the term lignosulfonates encompasses sulfonated kraft lignins.

In one embodiment, component (i) is a sulfonated kraft lignins.

In one embodiment, the solid state binder composition contains added sugar in an amount of 0 to 5 wt.-%, such as less than 5 wt.-%, such as 0 to 4.9 wt.-%, such as 0.1 to 4.9 wt.-%, based on the weight of lignosulfonate and sugar.

In one embodiment, the solid state binder composition comprises component (i), i.e. the lignosulfonate, in an amount of 50 to 98 wt.-%, such as 65 to 98 wt.-%, such as 80 to 98 wt.-%, based on the total weight of components (i) and (ii).

In one embodiment, the solid state binder composition comprises component (i), i.e. the lignosulfonate, in an amount of 50 to 88 wt.-%, such as 50 to 87 wt.-%, such as 65 to 88 wt.-%, such as 65 to 87 wt.-%, such as 80 to 88 wt.-%, such as 80 to 87 wt.-%, based on the total weight of components (i) and (ii).

In one embodiment, the solid state binder composition comprises component (i) in an amount of 50 to 98 wt.-%, such as 65 to 98 wt.-%, such as 80 to 98 wt.-%, based on the dry weight of components (i), (ii), and (iii).

In one embodiment, the solid state binder composition comprises component (i) in an amount of 50 to 88 wt.-%, such as 50 to 87 wt.-%, such as 65 to 88 wt.-%, such as 65 to 87 wt.-%, such as 80 to 88 wt.-%, such as 80 to 87 wt.-%, based on the dry weight of components (i), (ii), and (iii).

For the purpose of the present invention, content of lignin functional groups is determined by using ³¹P NMR as characterization method.

Sample preparation for ³¹P NMR is performed by using 2-chloro-4,4,5,5-tetramethyl-1,3,2-dioxaphospholane (TMDP) as phosphitylation reagent and cholesterol as internal standard. Integration is according to the work of Granata and Argyropoulos (J. Agric. Food Chem. 43:1538-1544).

### Component (ii) of the solid state binder compositions

Component (ii) is in form of one or more cross-linkers. The cross-linkers used are preferably solid at room temperature (21 °C), e.g. powders.

In one embodiment, component (ii) is in form of one or more cross-linkers selected from
a) β-hydroxyalkylamide-cross-linkers and/or oxazoline-cross-linkers, and/or
b) the group consisting of multifunctional organic amines such as an alkanolamine, diamines, such as hexamethyldiamine, triamines, and/or
c) epoxy compounds having a molecular weight of more than 500, such as one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, and/or
d) one or more cross-linkers selected from the group consisting of polyethylene imine, polyvinyl amine, fatty amines; and/or
e) one more cross-linkers in form of fatty amides; and/or
f) one or more cross-linkers selected from the group consisting of aromatic aldehydes such as hydroxybenzaldehyde, such as aminobenzaldehyde, such as hydroxy-methoxy benzaldehyde and/or from the group of aliphatic aldehydes such as decanal and/or
g) one or more cross-linkers selected from polyester polyols, such as polycaprolactone; and/or
h) one or more cross-linkers selected from the group consisting of starch, modified starch, CMC; and/or
i) one or more cross-linkers in form of aliphatic multifunctional carbodiimides; and/or
j) one or more cross-linkers selected from melamine based cross- linkers, such as a hexakis(methylmethoxy)melamine (HMMM) based cross-linkers.

In one embodiment, the component (ii) comprises in one embodiment one or more cross-linkers selected from β-hydroxyalkylamide-cross-linkers and/or oxazoline-cross-linkers.

β-hydroxyalkylamide-cross-linkers is a curing agent for the acid-functional macromolecules. It provides a hard, durable, corrosion resistant and solvent resistant cross-linked polymer network. It is believed the β-hydroxyalkylamide cross-linkers cure through esterification reaction to form multiple ester linkages. The hydroxy functionality of the β-hydroxyalkylamide-cross-linkers should be an average of at least 2, preferably greater than 2 and more preferably 2-4 in order to obtain optimum curing response.

Oxazoline group containing cross-linkers are polymers containing one of more oxazoline groups in each molecule and generally, oxazoline containing cross-linkers can easily be obtained by polymerizing an oxazoline derivative. The patent US 6 818 699 B2 provides a disclosure for such a process.

In one embodiment, component (ii) is one or more cross-linkers selected from the group consisting of multifunctional organic amines such as an alkanolamine, diamines, such as hexamethyldiamine, triamines.

In one embodiment, the component (ii) is one or more epoxy compounds having a molecular weight of more than 500 one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, such as β-hydroxyalkylamide groups.

In one embodiment, component (ii) is one or more cross-linkers selected from the group consisting of polyethylene imines, polyvinyl amines.

In one embodiment, component (ii) is one or more cross-linkers selected from the group consisting of fatty amines.

In one embodiment, component (ii) is one or more cross-linkers in form of fatty amides.

In one embodiment, component (ii) is one or more cross-linkers in form of aromatic aldehydes such as hydroxybenzaldehyde, such as aminobenzaldehyde, such as hydroxy-methoxy benzaldehyde and/or from the group of aliphatic aldehydes such as decanal.

In one embodiment, component (ii) is one or more cross-linkers selected from polyester polyols, such as polycaprolactone.

In one embodiment, component (ii) is one or more cross-linkers selected from the group consisting of starch, modified starch, CMC.

In one embodiment, component (ii) is one or more cross-linkers in form of multifunctional carbodiimides, such as aliphatic multifunctional carbodiimides.

In one embodiment, the component (ii) is one or more cross-linkers in form of aziridines, such as CX100, NeoAdd-Pax 521/523.

In one embodiment, component (ii) is one or more cross-linkers selected from melamine based cross-linkers, such as a hexakis(methylmethoxy)melamine (HMMM) based cross-linkers.

Examples of such compounds are Picassian XL 701, 702, 725 (Stahl Polymers), such as ZOLDINE^{®} XL-29SE (Angus Chemical Company), such as CX300 (DSM), such as Carbodilite V-02-L2 (Nisshinbo Chemical Inc.).

In one embodiment, component (ii) is Primid XL552, which has the following structure:
Component (ii) can also be any mixture of the above mentioned compounds.

In one embodiment, the binder composition according to the present invention comprises component (ii) in an amount of 1 to 50 wt.-%, such as 4 to 20 wt.-%, such as 6 to 12 wt.-%, based on the dry weight of component (i).

In one embodiment, the component (ii) is in form of one or more cross-linkers selected from
- β-hydroxyalkylamide-cross-linkers, such as N-(2-hydroxyisopropyl)amide-cross-linkers, such as N-(2-hydroxyethyl)amide-cross-linkers, such as N-(2-hydroxyethyl)adipamide-cross-linkers, such as N,N,N',N'-tetrakis(2-hydroxyethyl)adipamide and/or
- the group consisting of multifunctional organic amines such as an alkanolamine, diamines, such as hexamethyldiamine, and/or
- epoxy compounds having a molecular weight of more than 500, such as an epoxidised oil based on fatty acid triglyceride or one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, and/or
- one or more cross-linkers in form of multifunctional carbodiimides, such as aliphatic multifunctional carbodiimides.

In one embodiment, the component (ii) comprises one or more cross-linkers selected from
- β-hydroxyalkylamide-cross-linkers, such as N-(2-hydroxyisopropyl)amide-cross-linkers, such as N-(2-hydroxyethyl)amide-cross-linkers, such as N-(2-hydroxyethyl)adipamide-cross-linkers, such as N,N,N',N'-tetrakis(2-hydroxyethyl)adipamide.

In one embodiment, the component (ii) in an amount of 2 to 90 wt.-%, such as 6 to 60 wt.-%, such as 10 to 40 wt.-%, such as 25 to 40 wt.-%, based on the dry weight of component (i).

### Component (iii) of the solid state binder composition

Optionally and preferably, the solid state binder composition may comprise a component (iii). Component (iii) is in form of one or more plasticizers.

In one embodiment, component (iii) is in form of one or more plasticizers selected from the group consisting of one or more plasticizers selected from the group consisting of polyethylene glycols, polyethylene glycol ethers, polyethers, hydrogenated sugars, phthalates and/or acids,such as adipic acid, vanillic acid, lactic acid and/or ferullic acid, acrylic polymers, polyvinyl alcohol, polyurethane dispersions, ethylene carbonate, propylene carbonate, lactones, lactams, lactides, acrylic based polymers with free carboxy groups and/or polyurethane dispersions with free carboxy groups, and/or
one or more plasticizers selected from the group consisting of fatty alcohols, monohydroxy alcohols, such as stearyl alcohol; and/or one or more plasticizers selected from the group consisting of alkoxylates such as ethoxylates, such as butanol ethoxylates, such as butoxytriglycol; and/or
one or more plasticizers in form of propylene glycols; and/or one or more plasticizers in form of glycol esters; and/or
one or more plasticizers selected from the group consisting of adipates, acetates, benzoates, cyclobenzoates, citrates, stearates, sorbates, sebacates, azelates, butyrates, valerates; and/or
one or more plasticizers selected from the group consisting of phenol derivatives, such as alkyl or aryl substituted phenols; and/or
one or more plasticizers selected from the group consisting of silanols, siloxanes; and/or
one or more plasticizers selected from the group consisting of sulfates such as alkyl sulfates, sulfonates such as alkyl aryl sulfonates such as alkyl and/or
sulfonates, phosphates such as tripolyphosphates; and/or one or more plasticizers in form of hydroxy acids; and/or
one or more plasticizers selected from the group consisting of monomeric amides, such as acetamides, benzamide, fatty acid amides such as tall oil amides; and/or
one or more plasticizers selected from the group consisting of quaternary ammonium compounds such as trimethylglycine, distearyldimethylammoniumchloride; and/or
one or more plasticizers selected from acid methyl esters; and/or
one or more plasticizers selected from the group consisting of alkyl polyglucosides, gluconamides, aminoglucoseamides, sucrose esters, sorbitan esters; and/or
one or more plasticizers selected from the group consisting of polyethylene glycols, polyethylene glycol ethers.

In one embodiment, component (iii) is in form of one or more plasticizers selected from the group consisting of propylene glycols, phenol derivatives, silanols, siloxanes, hydroxy acids, vegetable oils, polyethylene glycols, polyethylene glycol ethers, triethanolamine, or any mixtures thereof.

Another particular surprising aspect of the present invention is that the use of plasticizers having a boiling point of more than 100 to 380 °C, more preferred 120 to 300 °C, more preferred 140 to 250 °C, strongly improves the mechanical properties of the mineral fibre products according to the present invention although, in view of their boiling point, it is likely that these plasticizers will at least in part evaporate during the curing of the solid state binders in contact with the mineral fibres.

In one embodiment, component (iii) comprises one or more plasticizers having a boiling point of more than 100 °C, such as 110 to 280 °C, more preferred 120 to 260 °C, more preferred 140 to 250 °C.

It is believed that the effectiveness of these plasticizers in the solid state binder composition according to the present invention is associated with the effect of increasing the mobility of the oxidized lignins during the curing process. It is believed that the increased mobility of the lignins or oxidized lignins during the curing process facilitates the effective cross-linking.

In one embodiment, component (iii) comprises one or more polyethylene glycols having an average molecular weight of 150 to 50000 g/mol, in particular 150 to 4000 g/mol, more particular 150 to 1000 g/mol, preferably 150 to 500 g/mol, more preferably 200 to 400 g/mol.

In one embodiment, component (iii) comprises one or more polyethylene glycols having an average molecular weight of 4000 to 25000 g/mol, in particular 4000 to 15000 g/mol, more particular 8000 to 12000 g/mol.

In one embodiment component (iii) is capable of forming covalent bonds with component (i) and/or component (ii) during the curing process. Such a component would not evaporate and remain as part of the composition but will be effectively altered to not introduce unwanted side effects e.g. water absorption in the cured product. Non-limiting examples of such a component are caprolactone and acrylic based polymers with free carboxyl groups.

In one embodiment, component (iii) is selected from the group consisting of fatty alcohols, monohydroxy alcohols, such as pentanol, stearyl alcohol.

In one embodiment, component (iii) is selected from one or more plasticizers selected from the group consisting of alkoxylates such as ethoxylates such as butanol ethoxylates, such as butoxytriglycol.

In one embodiment, component (iii) is selected from one or more propylene glycols.

In one embodiment, component (iii) is selected from one or more glycol esters.

In one embodiment, component (iii) is selected from one or more plasticizers selected from the group consisting of adipates, acetates, benzoates, cyclobenzoates, citrates, stearates, sorbates, sebacates, azelates, butyrates, valerates.

In one embodiment, component (iii) is selected from one or more plasticize rs selected from the group consisting of phenol derivatives such as alkyl or aryl substituted phenols.

In one embodiment, component (iii) is selected from one or more plasticizers selected from the group consisting of silanols, siloxanes.

In one embodiment, component (iii) is selected from one or more plasticizers selected from the group consisting of sulfates such as alkyl sulfates, sulfonates such as alkyl aryl sulfonates such as alkyl sulfonates, phosphates such as tripolyphosphates; such as tributylphosphates.

In one embodiment, component (iii) is selected from one or more hydroxy acids.

In one embodiment, component (iii) is selected from one or more plasticizers selected from the group consisting of monomeric amides such as acetamides, benzamide, fatty acid amides such as tall oil amides.

In one embodiment, component (iii) is selected from one or more plasticizers selected from the group consisting of quaternary ammonium compounds such as trimethylglycine, distearyldimethylammoniumchloride.

In one embodiment, component (iii) is selected from one or more plasticizers selected from the group consisting of vegetable oils such as castor oil, palm oil, linseed oil, tall oil, soybean oil.

In one embodiment, component (iii) is in form of tall oil.

In one embodiment, component (iii) is selected from one or more plasticizers selected from the group consisting of hydrogenated oils, acetylated oils.

In one embodiment, component (iii) is selected from one or more fatty acid methyl esters.

In one embodiment, component (iii) is selected from one or more plasticizers selected from the group consisting of alkyl polyglucosides, gluconamides, aminoglucoseamides, sucrose esters, sorbitan esters.

In one embodiment, component (iii) is selected from the group consisting of polyethylene glycols, polyethylene glycol ethers.

In one embodiment, component (iii) is selected from the group consisting of triethanolamine.

In one embodiment, component (iii) is in form of propylene glycols, phenol derivatives, silanols, siloxanes, hydroxy acids, vegetable oils, polyethylene glycols, polyethylene glycol ethers, and/or one or more plasticizers in form of polyols, such as 1,1,1-Tris(hydroxymethyl)propane, triethanolamine, or any mixtures thereof.

It has surprisingly been found that the inclusion of plasticizers in the solid state binder compositions according to the present invention strongly improves the mechanical properties of the mineral fibre products according to the present invention.

The term plasticizer refers to a substance that is added to a material in order to make the material softer, more flexible (by decreasing the glass-transition temperature Tg) and easier to process.

Component (iii) can also be any mixture of the above mentioned compounds. In one embodiment, component (iii) is present in an amount of 0.5 to 50, preferably 2.5 to 25, more preferably 3 to 15 wt.-%, based on the dry weight of component (i).

In one embodiment the solid state binder comprises component (i) in an amount of 25 to 95 wt.-%, such as 30 to 90 wt.-%, such as 35 to 85 wt.-%, based on the dry weight of binder composition, and/or
component (ii) in an amount of 1 to 40 wt.-%, such as 4 to 20 wt.-%, such as 6 to 12 wt.-%, based on the dry weight of component (i), and/or component (iii) is present in an amount of 0.5 to 50, preferably 2.5 to 25, more preferably 3 to 15 wt.-%, based on the dry weight of component (i).

### Solid state binder composition for mineral fibers comprising components (i) and (iia)

In one embodiment the present invention is directed to a solid state binder composition for mineral fibers comprising:
- a component (i) in form of one or more oxidized lignins;
- a component (iia) in form of one or more modifiers.

The present inventors have found that the excellent binder properties can also be achieved by a two-component system which comprises component (i) in form of one or more oxidized lignins and a component (iia) in form of one or more modifiers, and optionally any of the other components mentioned above and below.

In one embodiment, component (iia) is a modifier in form of one or more compounds selected from the group consisting of epoxidised oils based on fatty acid triglycerides.

In one embodiment, component (iia) is a modifier in form of one or more compounds selected from molecules having 3 or more epoxy groups.

In one embodiment, component (iia) is a modifier in form of one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups.

In one embodiment, component (iia) is one or more modifiers selected from the group consisting of polyethylene imine, polyvinyl amine, fatty amines.

In one embodiment, the component (iia) is one or more modifiers selected from aliphatic multifunctional carbodiimides.

Component (iia) can also be any mixture of the above mentioned compounds.

Without wanting to be bound by any particular theory, the present inventors believe that the excellent binder properties achieved by the binder composition for mineral fibers comprising components (i) and (iia), and optional further components, are at least partly due to the effect that the modifiers used as components (iia) at least partly serve the function of a plasticizer and a crosslinker.

In one embodiment, the solid state binder composition comprises component (iia) in an amount of 1 to 40 wt.-%, such as 4 to 20 wt.-%, such as 6 to 12 wt.-%, based on the dry weight of the component (i).

### Further Components

In some embodiments, the solid state binder composition according to the present invention comprises further components. The further components used are preferably solid at room temperature (21 °C), e.g. powders.

In one embodiment, the binder composition according to the present invention comprises a catalyst selected from inorganic acids, such as sulfuric acid, sulfamic acid, nitric acid, boric acid, hypophosphorous acid, and/or phosphoric acid, and/or any salts thereof such as sodium hypophosphite, and/or ammonium salts, such as ammonium salts of sulfuric acid, sulfamic acid, nitric acid, boric acid, hypophosphorous acid, and/or phosphoric acid, and/or sodium polyphosphate (STTP), and/or sodium metaphosphate (STMP), and/or phosphorous oxychloride. The presence of such a catalyst can improve the curing properties of the solid state binder compositions according to the present invention.

In one embodiment, the solid state binder composition according to the present invention comprises a catalyst selected from Lewis acids, which can accept an electron pair from a donor compound forming a Lewis adduct, such as ZnCl₂, Mg(ClO₄)₂, Sn [N(SO₂ -n-C₈F₁₇)₂]₄.

In one embodiment, the solid state binder composition according to the present invention comprises a catalyst selected from metal chlorides, such as KCI, MgCl₂, ZnCl₂, FeCl₃ and SnCl₂.

In one embodiment, the solid state binder composition according to the present invention comprises a catalyst selected from organometallic compounds, such as titanate-based catalysts and stannum based catalysts.

In one embodiment, the binder composition comprises a catalyst selected from chelating agents, such as transition metals, such as iron ions, chromium ions, manganese ions, copper ions and/or from peroxides such as organic peroxides such as dicumyl peroxide.

In one embodiment, the binder composition according to the present invention comprises a catalyst selected from phosphites such as alkyl phosphites, such as aryl phosphites such as triphenyl phosphite.

In one embodiment, the binder composition according to the present invention comprises a catalyst selected from the group of ternary amines such as tris-2,4,6-dimethylaminomethyl phenol.

In one embodiment, the solid state binder composition according to the present invention further comprises a further component (iv) in form of one or more silanes.

In one embodiment, the solid state binder composition according to the present invention comprises a further component (iv) in form of one or more coupling agents, such as organofunctional silanes.

In one embodiment, component (iv) is selected from group consisting of organofunctional silanes, such as primary or secondary amino functionalized silanes, epoxy functionalized silanes, such as polymeric or oligomeric epoxy functionalized silanes, methacrylate functionalized silanes, alkyl and aryl functionalized silanes, urea funtionalised silanes or vinyl functionalized silanes.

In one embodiment, the binder composition further comprises a component (v) in form of one or more components selected from the group of bases, such as ammonia, such as alkali metal hydroxides, such as KOH, such as earth alkaline metal hydroxides, such as Ca(OH)₂, such as Mg(OH)₂, such as amines or any salts thereof.

In one embodiment, the solid state binder composition according to the present invention further comprises a further component in form of urea, in particular in an amount of 5 to 40 wt.-%, such as 10 to 30 wt.-%, 15 to 25 wt.-%, based on the dry weight of component (i).

In one embodiment, the solid state binder composition according to the present invention further comprises a further component in form of one or more carbohydrates selected from the group consisting of sucrose, reducing sugars, in particular dextrose, polycarbohydrates, and mixtures thereof, preferably dextrins and maltodextrins, more preferably glucose syrups, and more preferably glucose syrups with a dextrose equivalent value of DE = 30 to less than 100, such as DE = 60 to less than 100, such as DE = 60-99, such as DE = 85-99, such as DE = 95-99.

In one embodiment, the solid state binder composition according to the present invention further comprises a further component in form of one or more carbohydrates selected from the group consisting of sucrose and reducing sugars in an amount of 5 to 50 wt.-%, such as 5 to less than 50 wt.-%, such as 10 to 40 wt.-%, such as 15 to 30 wt.-% based on the dry weight of component (i).

In one embodiment, the mineral fibre product according to the present invention comprises mineral fibres in contact with the binder composition comprising a further component in form of one or more silicone resins.

In one embodiment, the binder composition according to the present invention comprises a further component (vi) in the form of one or more reactive or nonreactive silicones.

In one embodiment, the component (vi) is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.025-15 weight-%, preferably from 0.1-10 weight-%, more preferably 0.3-8 weight-%, based on the binder solids.

In one embodiment, the mineral fibre product according to the present invention comprises mineral fibres in contact with the binder composition comprising a further component in form of one or more mineral oils.

In the context of the present invention, a binder composition having a sugar content of 50 wt.-% or more, based on the total dry weight of the binder components, is considered to be a sugar based binder. In the context of the present invention, a binder composition having a sugar content of less than 50 wt.-%, based on the total dry weight of the binder components, is considered a non-sugar based binder.

In one embodiment, the solid state binder composition according to the present invention further comprises a further component in form of one or more surface active agents that are in the form of non-ionic and/or ionic emulsifiers such as polyoxyethylenes (4) lauryl ether, such as soy lecithin, such as sodium dodecyl sulfate.

In one embodiment, the solid state binder composition according to the present invention comprises
- a component (i) in form of one or more lignosulfonate lignins having a carboxylic acid group content of 0.03 to 1.4 mmol/g, based on the dry weight of the lignosulfonate lignins;
- a component (ii) in form of one or more cross-linkers selected from β-hydroxyalkylamide-cross-linkers and/or oxazoline-cross-linkers and/or is one or more cross-linkers selected from the group consisting of multifunctional organic amines such as an alkanolamine, diamines, such as hexamethyldiamine, triamines;
- a component (iii) in form of one or more polyethylene glycols having an average molecular weight of 150 to 50000 g/mol, in particular 150 to 4000 g/mol, more particular 150 to 1000 g/mol, preferably 150 to 500 g/mol, more preferably 150 to 300 g/mol, or one or more polyethylene glycols having an average molecular weight of 4000 to 25000 g/mol, in particular 4000 to 15000 g/mol, more particular 8000 to 12000 g/mol; wherein preferably the solid state binder composition comprises component (ii) in an amount of 1 to 40 wt.-%, such as 4 to 20 wt.-%, 6 to 12 wt.-%, based on the dry weight of component (i), and (iii) is present in an amount of 0.5 to 50, preferably 2.5 to 25, more preferably 3 to 15 wt.-%, based on the dry weight of component (i).

In one embodiment, the solid state binder composition according to the present invention consists essentially of
- a component (i) in form of one or more lignosulfonate lignins having a carboxylic acid group content of 0.03 to 1.4 mmol/g, based on the dry weight of the lignosulfonate lignins,;
- a component (ii) in form of one or more cross-linkers;
- a component (iii) in form of one or more plasticizers;
- a component (iv) in form of one or more coupling agents, such as organofunctional silanes;
- optionally a component in form of one or more compounds selected from the group of ammonia, amines or any salts thereof;
- optionally a component in form of urea;
- optionally a component in form of a more reactive or non-reactive silicones;
- optionally a hydrocarbon oil;
- optionally one or more surface active agents,

preferably with the proviso that the solid state binder composition does not comprise a cross-linker selected from
- epoxy compounds having a molecular weight M_{W} of 500 or less and/or
   with the proviso that the solid state binder composition does not comprise a cross-linker selected from
- carbonyl compounds selected from aldehydes, carbonyl compounds of the formula R-[C(O)R₁]ₓ
   in which:
   R represents a saturated or unsaturated and linear, branched or cyclic hydrocarbon radical, a radical including one or more aromatic nuclei which consist of 5 or 6 carbon atoms, a radical including one or more aromatic heterocycles containing 4 or 5 carbon atoms and an oxygen, nitrogen or sulfur atom, it being possible for the R radical to contain other functional groups,
   R₁ represents a hydrogen atom or a C₁-C₁₀alkyl radical, and x varies from 1 to 10
   and/or
   with the proviso that the solid state binder composition does not comprise a cross-linker selected from
- polyamines
and/or
with the proviso that the solid state binder composition does not comprise a cross-linker selected from
- mono- and oligosaccharides.

In one embodiment, the solid state binder composition according to the present invention consists essentially of
- a component (i) in form of one or more lignosulfonate lignins having a carboxylic acid group content of 0.03 to 1.4 mmol/g, based on the dry weight of the lignosulfonate lignins,;
   and/or
- a component (ii) in form of one or more cross-linkers;
- a component (iii) in form of one or more plasticizers;
- a component (iv) in form of one or more coupling agents, such as organofunctional silanes;
- optionally a component in form of one or more compounds selected from the group of ammonia, amines or any salts thereof;
- optionally a component in form of urea;
- optionally a component in form of a more reactive or non-reactive silicones;
- optionally a hydrocarbon oil;
- optionally one or more surface active agents,
preferably with the proviso that the solid state binder composition does not comprise a cross-linker selected from
- epoxy compounds having a molecular weight M_{W} of 500 or less and/or
   with the proviso that the solid state binder composition does not comprise a cross-linker selected from
- carbonyl compounds selected from aldehydes, carbonyl compounds of the formula R-[C(O)R₁]ₓ
   in which:
   R represents a saturated or unsaturated and linear, branched or cyclic hydrocarbon radical, a radical including one or more aromatic nuclei which consist of 5 or 6 carbon atoms, a radical including one or more aromatic heterocycles containing 4 or 5 carbon atoms and an oxygen, nitrogen or sulfur atom, it being possible for the R radical to contain other functional groups,
   R₁ represents a hydrogen atom or a C₁-C₁₀alkyl radical, and x varies from 1 to 10
   and/or
with the proviso that the solid state binder composition does not comprise a cross-linker selected from
- polyamines
and/or
with the proviso that the solid state binder composition does not comprise a cross-linker selected from
- mono- and oligosaccharides.

In one embodiment, the solid state binder composition according to the present invention consists essentially of
- a component (i) in form of one or more lignosulfonate lignins having a carboxylic acid group content of 0.03 to 1.4 mmol/g, based on the dry weight of the lignosulfonate lignins;
- a component (ii) in form of one or more cross-linkers;
- a component (iv) in form of one or more coupling agents, such as organofunctional silanes;
- optionally a component in form of one or more compounds selected from the group of ammonia, amines or any salts thereof;
- optionally a component in form of urea;
- optionally a component in form of a more reactive or non-reactive silicones;
- optionally a hydrocarbon oil;
- optionally one or more surface active agents,
preferably with the proviso that the solid state binder composition does not comprise a cross-linker selected from
- epoxy compounds having a molecular weight M_{W} of 500 or less and/or
   with the proviso that the solid state binder composition does not comprise a cross-linker selected from
- carbonyl compounds selected from aldehydes, carbonyl compounds of the formula R-[C(O)R₁]ₓ
   in which:
   R represents a saturated or unsaturated and linear, branched or cyclic hydrocarbon radical, a radical including one or more aromatic nuclei which consist of 5 or 6 carbon atoms, a radical including one or more aromatic heterocycles containing 4 or 5 carbon atoms and an oxygen, nitrogen or sulfur atom, it being possible for the R radical to contain other functional groups,
   R₁ represents a hydrogen atom or a C₁-C₁₀ alkyl radical, and x varies from 1 to 10
   and/or
   with the proviso that the solid state binder composition does not comprise a cross-linker selected from
   - polyamines
   and/or
   with the proviso that the solid state binder composition does not comprise a cross-linker selected from
   - mono- and oligosaccharides.

In one embodiment, the solid state binder composition according to the present invention consists essentially of
- a component (i) in form of one or more lignosulfonate lignins having a carboxylic acid group content of 0.03 to 1.4 mmol/g, based on the dry weight of the lignosulfonate lignins;
   and/or
- a component (ii) in form of one or more cross-linkers;
- a component (iv) in form of one or more coupling agents,
   such as organofunctional silanes;
- optionally a component in form of one or more compounds selected from the group of ammonia, amines or any salts thereof;
- optionally a component in form of urea;
- optionally a component in form of a more reactive or
   non-reactive silicones;
- optionally a hydrocarbon oil;
- optionally one or more surface active agents,
preferably with the proviso that the solid state binder composition does not comprise a cross-linker selected from
- epoxy compounds having a molecular weight M_{W} of 500 or less and/or
   with the proviso that the solid state binder composition does not comprise a cross-linker selected from
- carbonyl compounds selected from aldehydes, carbonyl compounds of the formula R-[C(O)R₁]ₓ
   in which:
   R represents a saturated or unsaturated and linear, branched or cyclic hydrocarbon radical, a radical including one or more aromatic nuclei which consist of 5 or 6 carbon atoms, a radical including one or more aromatic heterocycles containing 4 or 5 carbon atoms and an oxygen, nitrogen or sulfur atom, it being possible for the R radical to contain other functional groups,
   R₁ represents a hydrogen atom or a C₁-C₁₀ alkyl radical, and x varies from 1 to 10
   and/or
   with the proviso that the solid state binder composition does not comprise a cross-linker selected from
   - polyamines
   and/or
   with the proviso that the solid state binder composition does not comprise a cross-linker selected from
   - mono- and oligosaccharides.

### Method according to the present invention

The present invention is also directed to a method of producing a bonded mineral fibre product which comprises the steps of contacting mineral fibres with the inventive solid state binder composition described above and curing the binder composition in contact with the mineral fibres. The optional / preferred features of the solid state binder composition as described above also applies for the inventive method.

As described above in detail, the solid state binder composition comprises
- a component (i) in form of one or more lignosulfonate lignins having a carboxylic acid group content of 0.03 to 1.4 mmol/g, based on the dry weight of the lignosulfonate lignins,
- a component (ii) in form of one or more cross-linkers; and
- optionally a component (iii) in form of one or more plasticizers.

In order to bring the mineral fibres and the solid state binder composition into contact with each other, the mineral fibres and the solid state binder composition may be simply mixed with each other, e.g. in a stirring device. The mixture obtained can then be transferred to a curing device such as curing oven or a heating press. The solid state binder composition is generally cured thermally, e.g. by a chemical and/or physical reaction of the binder components, usually chemical reactions (cross-linking) and optionally physical reaction.

In a preferred embodiment, the curing of the binder composition in contact with the mineral fibres takes place in a heat press.

The curing of a binder composition in contact with the mineral fibres in a heat press has the particular advantage that it enables the production of high-density products. The binder composition according to the present invention is particularly suitable for use in such a method because it is a solid state binder and therefore the evaporation of the solution water is avoided.

Preferably, the curing of the binder composition in contact with the mineral fibres takes place at a temperature of 150 to 300 °C, preferably 170 to 250 °C, in particular 190 to 230 °C, preferably in a heat press.

In one embodiment, the curing takes place for a time of 30 seconds to 20 minutes, such as 1 to 15 minutes, such as 2 to 10 minutes. In a typical embodiment, curing takes place at a temperature of 150 to 250 °C for a time of 30 seconds to 20 minutes. The temperatures above are preferably the set temperature of the heat press.

There are several ways to prepare the solid state binder according to the present invention from the starting constituents.

In a preferred embodiment, the binder contacted with the mineral fibres is prepared by mixing of the constituents of the solid state binder composition wherein the average water content of the constituents, calculated as the weight of water in relation to the weight of the total solid state binder, is ≤ 30%, in particular ≤ 25%, more preferably ≤ 10%.

In an alternative preferred embodiment, the solid state binder composition contacted with the mineral fibres is prepared by dissolving all constituents in water followed by evaporating water or part of the water forming a powder or any other solid state.

A preferred method of evaporating water or part of the water to form a powder or any other solid state involves the use of spray drying the solid state binder composition.

In general, it depends on the ingredients used for the binder compositions whether a solid state binder composition is already obtained by mixing the ingredients or further measures are to be taken such as removal of the water or a part of the water contained in the ingredients mixed. Alternatively or in addition, the type and amount of cross-linker and/or, if used, of the plasticizer can be suitably selected such that a solid state binder compositions is obtained.

As mentioned before, removal of water can be effected before the ingredients for the binder composition are mixed and/or thereafter. For instance, if the one or more lignosulfonate lignins; the one or more cross-linkers; and, if added, the one or more plasticizers are all in solid form, the mixture of all ingredients will usually result in a solid state binder composition. If the one or more cross-linkers and/or, if added, the one or more plasticizers are in liquid form it might be necessary to remove the water or a part of water to obtain a solid state binder composition.

Water is usually present in the one or more lignosulfonate lignins, which may be removed before mixing the ingredients or thereafter.

### Binder composition for mineral fibers in form of a slurry

In one embodiment the present invention is directed to a binder composition for mineral fibers in form of a slurry comprising:
- a component (i) in form of one or more lignosulfonate lignins having a carboxylic acid group content of 0.03 to 1.4 mmol/g, based on the dry weight of the lignosulfonate lignins,
- a component (ii) in form of one or more cross-linkers;
- optionally a component (iii) in form of one or more plasticizers.

The present inventors have found that good binder properties can also be achieved by a binder composition which comprises component (i) in form of one or more lignosulfonate lignins ; a component (ii) in form of one or more cross-linkers; optionally a component (iii) in form of one or more plasticizers, and optionally any of the other components mentioned above and below, wherein the binder composition is in form of a slurry.

With respect to the lignosulfonate lignins, cross-linkers, plasticizers and other components contained in the binder composition reference is made to indications given for the solid state binder described above.

The binder composition in form of a slurry is a binder composition in form of a liquid wherein at least the lignosulfonate lignin is usually present as a solid. Such binder composition in form of a slurry also encompasses pasty binder compositions, i.e. binder compositions in form of a paste.

The binder composition in form of a slurry may comprise water. However, this water is usually bound in the one or more lignosulfonate lignins . The liquid contained in the binder composition in form of a slurry may comprise the one or more cross- linkers and/or, if added, the one or more plasticizers in liquid form. The liquid contained in the binder composition in form of a slurry preferably has a low content of water such as 5-20% by weight of water, based on the total weight of the binder composition, or is free of water. In this regard, the binder composition in form of a slurry of the invention can be considered as a non-aqueous binder composition.

### Mineral fibre product

Disclosed herein is also a mineral fibre product, comprising mineral fibres in contact with the cured solid state binder composition described above. The mineral fibre product is generally a bonded mineral fibre product. The mineral fibre product is preferably obtainable by the inventive method described above. The optional / preferred features of the solid state binder composition as described above and of the method as described above also apply for the mineral fibre product.

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a stone wool product. The mineral fibres are stone fibres.

### Fibre/melt composition

The man-made vitreous fibres (MMVF) can have any suitable oxide composition. The fibres can be glass fibres, ceramic fibres, basalt fibres, slag fibres or rock or stone fibres. The fibres are preferably of the types generally known as rock, stone or slag fibres, most preferably stone fibres.

Stone fibres commonly comprise the following oxides, in percent by weight:

| | |
|---|---|
| SiO₂: | 30 to 51 |
| Al₂O₃: | 12 to 30 |
| CaO: | 8 to 30 |
| MgO: | 2 to 25 |
| FeO (including Fe₂O₃): | 2 to 15 |
| Na₂O+K₂O: | not more than 10 |
| CaO+MgO: | 10 to 30 |

The MMVF have the following levels of elements, calculated as oxides in wt%:

| | |
|---|---|
| SiO₂: | at least 30, 32, 35 or 37; not more than 51, 48, 45 or 43 |
| Al₂O₃: | at least 12, 16 or 17; not more than 30, 27 or 25 |
| CaO: | at least 8 or 10; not more than 30, 25 or 20 |
| MgO: | at least 2 or 5; not more than 25, 20 or 15 |
| FeO (including Fe2O3): | at least 4 or 5; not more than 15, 12 or 10 |
| FeO+MgO: | at least 10, 12 or 15; not more than 30, 25 or 20 |
| Na₂O+K₂O: | zero or at least 1; not more than 10 |
| CaO+MgO: | at least 10 or 15; not more than 30 or 25 |
| TiO2: | zero or at least 1; not more than 6, 4 or 2 |
| TiO₂+FeO: | at least 4 or 6; not more than 18 or 12 |
| B₂O₃: | zero or at least 1; not more than 5 or 3 |
| P₂O₅: | zero or at least 1; not more than 8 or 5 |
| Others: | zero or at least 1; not more than 8 or 5 |

The MMVF disclosed herein preferably have the composition in wt%:

| | |
|---|---|
| SiO₂ | 35 to 50 |
| Al₂O₃ | 12 to 30 |
| TiO₂ | up to 2 |
| Fe₂O₃ | 3 to 12 |
| CaO | 5 to 30 |
| MgO | up to 15 |
| Na₂O | 0 to 15 |
| K2O | 0 to 15 |
| P₂O₅ | up to 3 |
| MnO | up to 3 |
| B₂O₃ | up to 3 |

Another preferred composition for the MMVF is as follows in wt%:

| | |
|---|---|
| SiO₂ | 39-55% preferably 39-52% |
| Al₂O₃ | 16-27% preferably 16-26% |
| CaO | 6-20% preferably 8-18% |
| MgO | 1-5% preferably 1-4.9% |
| Na₂O | 0-15% preferably 2-12% |
| K₂O | 0-15% preferably 2-12% |
| R₂O (Na₂O + K₂O) | 10-14.7% preferably 10-13.5% |
| P₂O₅ | 0-3% preferably 0-2% |
| Fe₂O₃ (iron total) | 3-15% preferably 3.2-8% |
| B₂O₃ | 0-2% preferably 0-1% |
| TiO₂ | 0-2% preferably 0.4-1% |
| Others | 0-2.0% |

Glass fibres commonly comprise the following oxides, in percent by weight:

| | |
|---|---|
| SiO₂: | 50 to 70 |
| Al₂O₃: | 10 to 30 |
| CaO: | not more than 27 |
| MgO: | not more than 12 |

Glass fibres can also contain the following oxides, in percent by weight:
Na₂O+K₂O: 8 to 18, in particular Na₂O+K₂O greater than CaO+MgO B₂O₃: 3 to 12

Some glass fibre compositions can contain Al ₂O₃: less than 2%.

Suitable fibre formation methods and subsequent production steps for manufacturing the mineral fibre product are those conventional in the art. The mineral fibre products produced, for instance, have the form of woven and nonwoven fabrics, mats, batts, slabs, sheets, plates, strips, rolls, and other shaped articles which find use, for example, as thermal or acoustical insulation materials, vibration damping, construction materials such as window profiles, facade insulation, reinforcing materials for roofing or flooring applications, as filter stock and in other applications.

In accordance with the present invention, it is also possible to produce composite materials by combining the bonded mineral fibre product with suitable composite layers or laminate layers such as, e.g., metal, wood, plaster boards, glass surfacing mats and other woven or non-woven materials.

Preferably the mineral fibre product is a plate, preferably a hard plate, such as a cladding plate, wherein the mineral fibres are preferably stone fibres. These plates are particular suitable for facade cladding.

The mineral fibre product may have a density of 80 to 1400 kg/m³, but the mineral fibre product is preferably a high-density product so that the mineral fibre product preferably has a density of 500 to 1400 kg/m³, more preferably 1000 to 1300 kg/m³, in particular 1100 to 1200 kg/m³, in particular when the mineral fibre product is in form of a plate.

Preferably, the mineral fibre product has an ignition loss of 3 to 30 wt.-%, in particular 5 to 25 wt.-%, more particular 10 to 20 wt.-%.

### Use according to the present invention

Although the binder composition according to the present invention is particularly useful for bonding mineral fibres, it may equally be employed in other applications typical for binders, e.g. as a binder for foundry sand, chipboard, glass fibre tissue, cellulosic fibres, non-woven paper products, composites, moulded articles, coatings etc.

In particular, the present invention also relates to the use of the solid state binder composition described above as a binder for mineral fibres or as a glue to adhere components with each other. The optional / preferred features of the solid state binder composition as described above, of the method as described above, and of the inventive mineral fibre product as described above also apply to the inventive mineral fibre product.

When the solid state binder composition is used as a glue to adhere components with each other, the components may be two components of the same material or of different material.

In a preferred embodiment, the solid state binder composition is used as a glue for gluing a sheet material on a component such as a stonewool product. The sheet material can be e.g. a fleece or a foil.

### Examples

In the following examples, several binders which fall under the definition of the present invention were prepared and compared to binders according to the prior art.

Unless stated otherwise, the following reagents were used as received:
Prefere^{®} 94 8182U0 Novolac resin was supplied by Prefere Resins and used as supplied. This resin has a hexamine content of 9.0 ± 0.5%.

Lignosulfonates were supplied by Borregaard, Norway and LignoTech, Florida as liquids with approximately 50 % solid content. Primid XL552 was supplied by EMS-CHEMIE AG.

### Fiber Bar Test

Stone wool fibers were produced on a stone wool production facility with added silane (Dynasylan HYDROSIL 1151; silane amount; 4.8 I/ton), surfactant (Tegopren 5840; 55 I/ton of a 0,5% solution in water) and oil (Tudalen 3912,0.4 I/ton). The stone wool fibers used have a coating content of 27-137 mg/kg; fibre diameter average numerical of 4,2-5,8 µm; shot content (>63 µm: <37%; >250 µm: <10% and >600 µm: <1,7%). The stone wool is used as supplied and it is opened in the Lodinger mixer to ensure proper mixing with the binder. This is done by filling the mixer with ± 1.7 kg wool, and mixing / opening it for 8 seconds. After opening the wool the stone wool fibers are mixed with the dry binder in required proportions for 30 seconds in a Stephan mixer. The mixture is transfered to a mould and cold-pressed. A laboratory heat-press with a pre-heating cycle is used for hot pressing into a panel. Press time and temperature are provided in Table 1. After cooling down the panel, it was cut to dimension of 320 x 50 mm.

Density, and bending strength of the samples were determined according to NEN-EN-323 (density), NEN-EN-310 (bending strength). Aging of 5 test pieces was done in (tap) water from 70°C (with surface tension changing additives: for instance, 0.5 ml Triton per liter) for 30 min. Determination of aged bending strength was in accordance with EN-310 within 20 minutes after the ageing period in a test room with an air temperature between 17 and 23°C. Density, unaged and aged bending strength are also part of Table 1.

### Comparative example

300 g of material (264 g stone wool fibers and 36g Prefere^{®} 94 8182U0 Novolac resin) was mixed and used as described in the Fibre Bar Test.

### Example 1

To 1500.0 g lignosulfonate solution (50 % solids), 545.0 g Primid XL552 solution (pre-made 31 wt% solution in water) was added and mixed. This mixture was dried in an oven at 105 C. The resulting material was milled portion-wise (50-100 g per portion) in a Herzog milling machine (running time: 30 seconds for each portion).

### Example 1.1

300 g of material (264 g stone wool fibers and 36g of milled dry binder from Example 1) was mixed and used as described in the Fibre Bar Test.

### Example 1.2

300 g of material (225 g stone wool fibers and 75g of milled dry binder from Example 1) was mixed and used as described in the Fibre Bar Test.

| | binder amount, % | curing temperature, C | curing time, min | thickness, mm | density, kg/m³ | bending strength, unaged N/mm² | bending strength, aged, N/mm² |
|---|---|---|---|---|---|---|---|
| com. example (PUF) | 12 | 200 | 3.5 | 8.0 | 1050 | 19.0 | 17.0 |
| example 1.1 | 12 | 240 | 4.5 | 8.0 | 1039 | 5.5 | 3.0 |
| example 1.2 | 25 | 240 | 4.5 | 7.7 | 1083 | 16.9 | 5.8 |

## Claims

1. A solid state binder composition for mineral fibres, comprising
- a component (i) in form of one or more
lignosulfonate lignins having a carboxylic acid group content of 0.03 to 1.4 mmol/g, based on the dry weight of the lignosulfonate lignins,
- a component (ii) in form of one or more cross-linkers.

2. The solid state binder composition according to claim 1, wherein the binder composition further comprises
- a component (iii) in form of one or more plasticizers.

3. The solid state binder composition according to any one of the preceding claims, wherein the water content, calculated as the weight of water in relation to the weight of the total solid state binder composition, is ≤ 30 %, in particular ≤ 25 %, more preferably ≤ 10 %.

4. The solid state binder composition according to any one of the preceding claims, which is in form of a powder and/or wherein 50 wt. % of the components of the solid state binder has a particle size of less than 500 µ, such as less than 200 µ, such as less than 100 µ and more than 10 µ, such as more than 20 µ, such as more than 25 µ, the particle size being determined by the methods disclosed in the description.

5. The solid state binder composition according to any one of the preceding claims, wherein component (i) is having a carboxylic acid group content of 0.05 to 0.6 mmol/g, based on the dry weight of lignosulfonate lignins and/or component (i) is in form of one or more lignosulfonate lignins having an average carboxylic acid group content of less than 1.8 groups per macromolecule considering the M_n wt. average of component (i), such as less than 1.4 such as less than 1.1 such as less than 0.7 such as less than 0.4 and/or
component (i) is having a content of phenolic OH groups of 0.3 to 2.5 mmol/g, such as 0.5 to 2.0 mmol/g, such as 0.5 to 1.5 mmol/g. based on the dry weight of lignosulfonate lignins and/or
component (i) is having a content of aliphatic OH groups of 1.0 to 8.0 mmol/g, such as 1.5 to 6.0 mmol/g, such as 2.0 to 5.0 mmol/g, based on the dry weight of lignosulfonate lignins.

6. The solid state binder composition according to any one of the preceding claims, wherein the component (i) comprises ammoniumlignosulfonates and/or calciumlignosulfonates, and/or magnesiumlignosulfonates, and any combinations thereof and/or
component (i) comprises ammoniumlignosulfonates and calciumlignosulfonates, wherein the molar ratio of NH₄⁺ to Ca²⁺ is in the range of 5:1 to 1:5, in particular 3:1 to 1:3 and/or
the binder composition contains added sugar in an amount of 0 to less than 5 wt.-%, based on the weight of lignosulfonate and sugar.

7. The solid state binder composition according to any of the preceding claims, wherein the binder composition comprises
component (i) in an amount of 50 to 98 wt.-%, such as 65 to 98 wt.-%, such as 80 to 98 wt.-%, based on the dry weight of components (i) and (ii) and/or
component (ii) in an amount of 1 to 50 wt.-%, such as 4 to 20 wt.-%, such as 6 to 12 wt.-%, based on the dry weight of component (i) and/or component (iii) in an amount of 0.5 to 50, preferably 2.5 to 25, more preferably 3 to 15 wt.-%, based on the dry weight of component (i).

8. The solid state binder composition according to any of the preceding claims, wherein the component (ii) is in form of one or more cross-linkers selected from
a) β-hydroxyalkylamide-cross-linkers and/or oxazoline-cross-linkers, and/or
b) the group consisting of multifunctional organic amines such as an alkanolamine, diamines, such as hexamethyldiamine, triamines, and/or
c) epoxy compounds having a molecular weight of more than 500, such as one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, and/or
d) one or more cross-linkers selected from the group consisting of polyethylene imine, polyvinyl amine, fatty amines; and/or
e) one more cross-linkers in form of fatty amides; and/or
f) one or more cross-linkers selected from the group consisting of aromatic aldehydes such as hydroxybenzaldehyde, such as aminobenzaldehyde, such as hydroxy-methoxy benzaldehyde and/or from the group of aliphatic aldehydes such as decanal and/or
g) one or more cross-linkers selected from polyester polyols, such as polycaprolactone; and/or
h) one or more cross-linkers selected from the group consisting of starch, modified starch, CMC; and/or
i) one or more cross-linkers in form of aliphatic multifunctional carbodiimides; and/or
j) one or more cross-linkers selected from melamine based cross- linkers, such as a hexakis(methylmethoxy)melamine (HMMM) based cross-linkers.

9. The solid state binder composition according to any of the preceding claims, wherein the component (ii) comprises one or more cross-linkers selected from
- β-hydroxyalkylamide-cross-linkers, such as N-(2-hydroxyisopropyl)amide-cross-linkers, such as N-(2-hydroxyethyl)amide-cross-linkers, such as N-(2-hydroxyethyl)adipamide-cross-linkers, such as N,N,N',N'-tetrakis(2-hydroxyethyl)adipamide.

10. The solid state binder composition according to any of the preceding claims, comprising component (i) in an amount of 25 to 95 wt.-%, such as 30 to 90 wt.-%, such as 35 to 85 wt.-%, based on the dry weight of binder composition and/or
component (ii) in an amount of 2 to 90 wt.-%, such as 6 to 60 wt.-%, such as 10 to 40 wt.-%, such as 25 to 40 wt.-%, based on the dry weight of component (i).

11. The solid state binder composition according to any of the preceding claims, wherein component (iii) is in form of one or more plasticizers selected from the group consisting of polyethylene glycols, polyethylene glycol ethers, polyethers, hydrogenated sugars, phthalates and/or acids,such as adipic acid, vanillic acid, lactic acid and/or ferullic acid, acrylic polymers, polyvinyl alcohol, polyurethane dispersions, ethylene carbonate, propylene carbonate, lactones, lactams, lactides, acrylic based polymers with free carboxy groups and/or polyurethane dispersions with free carboxy groups, and/or
one or more plasticizers selected from the group consisting of fatty alcohols, monohydroxy alcohols, such as stearyl alcohol; and/or one or more plasticizers selected from the group consisting of alkoxylates such as ethoxylates, such as butanol ethoxylates, such as butoxytriglycol; and/or
one or more plasticizers in form of propylene glycols; and/or one or more plasticizers in form of glycol esters; and/or
one or more plasticizers selected from the group consisting of adipates, acetates, benzoates, cyclobenzoates, citrates, stearates, sorbates, sebacates, azelates, butyrates, valerates; and/or
one or more plasticizers selected from the group consisting of phenol derivatives, such as alkyl or aryl substituted phenols; and/or
one or more plasticizers selected from the group consisting of silanols, siloxanes; and/or
one or more plasticizers selected from the group consisting of sulfates such as alkyl sulfates, sulfonates such as alkyl aryl sulfonates such as alkyl and/or
sulfonates, phosphates such as tripolyphosphates; and/or
one or more plasticizers in form of hydroxy acids; and/or
one or more plasticizers selected from the group consisting of monomeric amides, such as acetamides, benzamide, fatty acid amides such as tall oil amides; and/or
one or more plasticizers selected from the group consisting of quaternary ammonium compounds such as trimethylglycine, distearyldimethylammoniumchloride; and/or
one or more plasticizers selected from acid methyl esters; and/or
one or more plasticizers selected from the group consisting of alkyl polyglucosides, gluconamides, aminoglucoseamides, sucrose esters, sorbitan esters; and/or
one or more plasticizers selected from the group consisting of polyethylene glycols, polyethylene glycol ethers and/or
one or more plasticizers having a boiling point of 100 to 380 °C, more preferred 120 to 300 °C, more preferred 140 to 250 °C and/or
one or more polyethylene glycols having an average molecular weight of 150 to 50000 g/mol, in particular 600 to 10000 g/mol, more particular 1000 to 4000 g/mol.

12. The solid state binder composition according to any of the preceding claims, further comprising
- a component (iv) in form of one or more coupling agents, such as organofunctional silanes, and/or
- a component (v) in form of one or more components selected from the group of bases, in particular amines or any salts thereof, and/or
- a component in form of urea, in particular in an amount of 5 to 40 wt.-%, such as 10 to 30 wt.-%, such as 15 to 25 wt.-%, based on the dry weight of component (i) and/or
- a component (vi) in the form of one or more reactive or nonreactive silicones.

13. A method of producing a bonded mineral fibre product which comprises the steps of contacting the mineral fibres with a solid state binder composition according to any one of the claims 1 to 12, and curing the binder composition in contact with the mineral fibres.

14. The method according to claim 13, wherein the curing of the solid state binder composition in contact with the mineral fibres takes place in a heat press and/or the curing of the solid state binder composition in contact with the mineral fibres takes place at a temperature of 150 to 300 °C, preferably 170 to 250 °C, in particular 190 to 230 °C.

15. A use of a solid state binder composition according to any one of the claims 1 to 14 as a binder for mineral fibres or as a glue to adhere components with each other, preferably as a glue for gluing a sheet material such as a fleece or a foil on a stone wool product.

## Patentansprüche

1. Feststoffbindemittelzusammensetzung für Mineralfasern, umfassend
- eine Komponente (i) in Form eines oder mehrerer Lignosulfonatlignine aufweisend einen Carbonsäuregruppengehalt von 0,03 bis 1,4 mmol/g, basierend auf dem Trockengewicht der Lignosulfonatlignine,
- eine Komponente (ii) in Form von einem oder mehreren Vernetzern.

2. Feststoffbindemittelzusammensetzung nach Anspruch 1, wobei die Bindemittelzusammensetzung weiter Folgendes umfasst
- eine Komponente (iii) in Form eines oder mehrerer Weichmacher.

3. Feststoffbindemittelzusammensetzung nach einem der vorhergehenden Ansprüche, wobei der Wassergehalt, berechnet als das Gewicht des Wassers im Verhältnis zum Gewicht der gesamten Feststoffbindemittelzusammensetzung, ≤ 30 %, insbesondere ≤ 25 %, vorzugsweise ≤ 10 % beträgt.

4. Feststoffbindemittelzusammensetzung nach einem der vorhergehenden Ansprüche, die in Form eines Pulvers vorliegt und/oder bei der 50 Gew.-% der Komponenten des Feststoffbindemittels eine Teilchengröße von weniger als 500 µ, beispielsweise weniger als 200 µ, beispielsweise weniger als 100 µ und mehr als 10 µ, beispielsweise mehr als 20 µ, beispielsweise mehr als 25 µ, aufweisen, wobei die Teilchengröße nach den in der Beschreibung offengelegten Methoden bestimmt wird.

5. Feststoffbindemittelzusammensetzung nach einem der vorhergehenden Ansprüche, wobei die Komponente (i) einen Carbonsäuregruppengehalt von 0,05 bis 0,6 mmol/g bezogen auf das Trockengewicht der Lignosulfonatlignine aufweist und/oder die Komponente (i) in Form eines oder mehrerer Lignosulfonatlignine vorliegt, die einen durchschnittlichen Gehalt an Carbonsäuregruppe von weniger als 1,8 Gruppen pro Makromolekül unter Berücksichtigung des M_n-Gewichtsmittels der Komponente (i) aufweisen, beispielsweise weniger als 1,4, beispielsweise weniger als 1,1, beispielsweise weniger als 0,7, beispielsweise weniger als 0,4 und/oder
die Komponente (i) einen Gehalt an phenolischen OH-Gruppen von 0,3 bis 2,5 mmol/g, beispielsweise 0,5 bis 2,0 mmol/g, beispielsweise 0,5 bis 1,5 mmol/g. bezogen auf das Trockengewicht der Lignosulfonat-Lignine aufweist und/oder
die Komponente (i) einen Gehalt an aliphatischen OH-Gruppen von 1,0 bis 8,0 mmol/g, beispielsweise 1,5 bis 6,0 mmol/g, beispielsweise 2,0 bis 5,0 mmol/g bezogen auf das Trockengewicht der Lignosulfonat-Lignine aufweist.

6. Feststoffbindemittelzusammensetzung nach einem der vorhergehenden Ansprüche, wobei die Komponente (i) Ammoniumlignosulfonate und/oder Calciumlignosulfonate und/oder Magnesiumlignosulfonate und beliebige Kombinationen davon umfasst und/oder
die Komponente (i) Ammoniumlignosulfonate und Calciumlignosulfonate umfasst, wobei das molare Verhältnis von NH₄⁺ to Ca²⁺ im Bereich von 5:1 bis 1:5, insbesondere 3:1 bis 1:3 liegt und/oder
die Bindemittelzusammensetzung zugesetzten Zucker in einer Menge von 0 bis weniger als 5 Gew.-% bezogen auf das Gewicht von Lignosulfonat und Zucker enthält.

7. Feststoffbindemittelzusammensetzung nach einem der vorhergehenden Ansprüche, wobei die Bindemittelzusammensetzung Folgendes umfasst
Komponente (i) in einer Menge von 50 bis 98 Gew.-%, beispielsweise 65 bis 98 Gew.-%, beispielsweise 80 bis 98 Gew.-%, bezogen auf das Trockengewicht der Komponenten (i) und (ii) und/oder
Komponente (ii) in einer Menge von 1 bis 50 Gew.-%, beispielsweise 4 bis 20 Gew.-, beispielsweise 6 bis 12 Gew.-% bezogen auf das Trockengewicht der Komponente (i) und/oder Komponente (Hi) in einer Menge von 0,5 bis 50, vorzugsweise 2,5 bis 25, besonders bevorzugt 3 bis 15 Gew.-% bezogen auf das Trockengewicht der Komponente (i).

8. Feststoffbindemittelzusammensetzung nach einem der vorhergehenden Ansprüche, wobei die Komponente (ii) in Form von einem oder mehreren Vernetzern vorliegt, die aus Folgendem ausgewählt sind
a) β-Hydroxyalkylamid-Vernetzer und/oder Oxazolin-Vernetzer, und/oder
b) die Gruppe bestehend aus multifunktionellen organischen Aminen, wie z. B. einem Alkanolamin, Diaminen, wie z. B. Hexamethyldiamin, Triaminen, und/oder
c) Epoxyverbindungen mit einem Molekulargewicht von mehr als 500, beispielsweise ein oder mehrere flexible(s) Oligomer(e) oder Polymer(e), beispielsweise ein Polymer auf Acrylbasis mit niedrigem Tg-Wert, beispielsweise ein Polymer auf Vinylbasis mit niedrigem Tg-Wert, beispielsweise ein Polyether mit niedrigem Tg-Wert, der reaktive funktionelle Gruppen wie Carbodiimidgruppen, wie Anhydridgruppen, wie Oxazolingruppen, wie Aminogruppen, wie Epoxygruppen enthält, und/oder
d) einen oder mehrere Vernetzer, ausgewählt aus der Gruppe bestehend aus Polyethylenimin, Polyvinylamin, Fettaminen; und/oder
e) einen oder mehrere Vernetzer in Form von Fettamiden; und/oder
f) ein oder mehrere Vernetzer, ausgewählt aus der Gruppe bestehend aus aromatischen Aldehyden wie Hydroxybenzaldehyd, wie Aminobenzaldehyd, wie Hydroxymethoxybenzaldehyd und/oder aus der Gruppe der aliphatischen Aldehyde wie Decanal und/oder
g) einen oder mehrere Vernetzer ausgewählt aus Polyesterpolyolen, beispielsweise Polycaprolacton; und/oder
h) einen oder mehrere Vernetzer ausgewählt aus der Gruppe bestehend aus Stärke, modifizierter Stärke, CMC; und/oder
i) ein oder mehrere Vernetzer in Form von aliphatischen multifunktionellen Carbodiimiden; und/oder
j) einen oder mehrere Vernetzer ausgewählt aus Vernetzern auf Melaminbasis, beispielsweise ein Vernetzer auf Hexakis(methylmethoxy)melaminbasis (HMMM).

9. Feststoffbindemittelzusammensetzung nach einem der vorhergehenden Ansprüche, wobei die Komponente (H) einen oder mehrere Vernetzer umfasst, die ausgewählt sind aus
- β-Hydroxyalkylamid-Vernetzern, beispielsweise N-(2-Hydroxyisopropyl)amid-Vernetzern, beispielsweise N-(2-Hydroxyethyl)amid-Vernetzern, beispielsweise N-(2-Hydroxyethyl)adipamid-Vernetzern, beispielsweise N,N,N',N'-Tetrakis(2-hydroxyethyl)adipamid.

10. Feststoffbindemittelzusammensetzung nach einem der vorhergehenden Ansprüche, die die Komponente (i) in einer Menge von 25 bis 95 Gew.-%, beispielsweise 30 bis 90 Gew.-%, beispielsweise 35 bis 85 Gew.-% bezogen auf das Trockengewicht der Bindemittelzusammensetzung umfasst und/oder
die die Komponente (ii) in einer Menge von 2 bis 90 Gew.-%, beispielsweise 6 bis 60 Gew.-%, beispielsweise 10 bis 40 Gew.-%, beispielsweise 25 bis 40 Gew.-% bezogen auf das Trockengewicht der Komponente (i) umfasst.

11. Feststoffbindemittelzusammensetzung nach einem der vorhergehenden Ansprüche, wobei die Komponente (Hi) in Form eines oder mehrerer Weichmacher vorliegt, die aus der Gruppe ausgewählt sind, bestehend aus Polyethylenglykolen, Polyethylenglykolethern, Polyethern, hydrierten Zuckern, Phthalaten und/oder Säuren, wie Adipinsäure, Vanillinsäure, Milchsäure und/oder Ferulasäure, Acrylpolymere, Polyvinylalkohol, Polyurethandispersionen, Ethylencarbonat, Propylencarbonat, Lactone, Lactame, Lactide, Polymere auf Acrylbasis mit freien Carboxygruppen und/oder Polyurethandispersionen mit freien Carboxygruppen, und/oder
einen oder mehrere Weichmacher, ausgewählt aus der Gruppe bestehend aus Fettalkoholen, Monohydroxyalkoholen, beispielsweise Stearylalkohol; und/oder einen oder mehrere Weichmacher, ausgewählt aus der Gruppe bestehend aus Alkoxylaten, beispielsweise Ethoxylaten, beispielsweise Butanolethoxylaten, beispielsweise Butoxytriglykol; und/oder
einen oder mehrere Weichmacher in Form von Propylenglykolen; und/oder einen oder mehrere Weichmacher in Form von Glykolestern; und/oder
einen oder mehrere Weichmacher, ausgewählt aus der Gruppe bestehend aus Adipaten, Acetaten, Benzoaten, Cyclobenzoaten, Citraten, Stearaten, Sorbaten, Sebacaten, Azelaten, Butyraten, Valeraten; und/oder
einen oder mehrere Weichmacher, ausgewählt aus der Gruppe bestehend aus Phenolderivaten, beispielsweise alkyl- oder arylsubstituierte Phenole; und/oder
einen oder mehrere Weichmacher, ausgewählt aus der Gruppe bestehend aus Silanolen, Siloxanen; und/oder
einen oder mehrere Weichmacher, ausgewählt aus der Gruppe bestehend aus Sulfaten, beispielsweise Alkylsulfaten, Sulfonaten, beispielsweise Alkylarylsulfonaten, beispielsweise Alkyl- und/oder
Sulfonaten, Phosphaten, beispielsweise Tripolyphosphaten; und/oder
einen oder mehrere Weichmacher in Form von Hydroxysäuren; und/oder
einen oder mehrere Weichmacher ausgewählt aus der Gruppe bestehend aus monomeren Amiden, beispielsweise Acetamiden, Benzamiden, Fettsäureamiden, beispielsweise Tallölamiden; und/oder
einen oder mehrere Weichmacher ausgewählt aus der Gruppe bestehend aus quaternären Ammoniumverbindungen, beispielsweise Trimethylglycin, Distearyldimethylammoniumchlorid; und/oder
einen oder mehrere Weichmacher ausgewählt aus Säuremethylestern; und/oder
einen oder mehrere Weichmacher ausgewählt aus der Gruppe bestehend aus Alkylpolyglucosiden, Gluconamiden, Aminoglucoseamiden, Saccharoseestern, Sorbitanestern; und/oder
einen oder mehrere Weichmacher ausgewählt aus der Gruppe bestehend aus Polyethylenglykolen, Polyethylenglykolethern und/oder
einen oder mehrere Weichmacher mit einem Siedepunkt von 100 bis 380 °C, vorzugsweise 120 bis 300 °C, besonders bevorzugt 140 bis 250 °C und/oder
ein oder mehrere Polyethylenglykole mit einem durchschnittlichen Molekulargewicht von 150 bis 50000 g/mol, insbesondere 600 bis 10000 g/mol, mehr insbesondere 1000 bis 4000 g/mol.

12. Feststoffbindemittelzusammensetzung nach einem der vorhergehenden Ansprüche, weiter umfassend
- eine Komponente (iv) in Form eines oder mehrerer Haftvermittler, beispielsweise organofunktionelle Silane, und/oder
- eine Komponente (v) in Form einer oder mehrerer Komponenten ausgewählt aus der Gruppe der Basen, insbesondere der Amine oder ihrer Salze, und/oder
- eine Komponente in Form von Harnstoff, insbesondere in einer Menge von 5 bis 40 Gew.-%, wie beispielsweise 10 bis 30 Gew.-%, beispielsweise 15 bis 25 Gew.-% bezogen auf das Trockengewicht der Komponente (i) und/oder
- eine Komponente (vi) in Form eines oder mehrerer reaktiver oder nicht reaktiver Silikone.

13. Verfahren zur Herstellung eines gebundenen Mineralfaserprodukts, das die Schritte des Inkontaktbringens der Mineralfasern mit einer Feststoffbindemittelzusammensetzung nach einem der Ansprüche 1 bis 12, und des Aushärtens der Bindemittelzusammensetzung in Kontakt mit den Mineralfasern umfasst.

14. Verfahren nach Anspruch 13, wobei das Aushärten der Feststoffbindemittelzusammensetzung in Kontakt mit den Mineralfasern in einer Wärmepresse erfolgt und/oder das Aushärten der Feststoffbindemittelzusammensetzung in Kontakt mit den Mineralfasern bei einer Temperatur von 150 bis 300 °C, vorzugsweise 170 bis 250 °C, insbesondere 190 bis 230 °C, erfolgt.

15. Verwendung einer Feststoffbindemittelzusammensetzung nach einem der Ansprüche 1 bis 14 als Bindemittel für Mineralfasern oder als Klebstoff zum Verkleben von Bauteilen untereinander, vorzugsweise als Klebstoff zum Verkleben eines Flächenmaterials wie eines Vlieses oder einer Folie auf einem Steinwollprodukt.

## Revendications

1. Composition de liant à l'état solide pour fibres minérales, comprenant :
- un composant (i) sous la forme d'une ou de plusieurs lignines lignosulfonates présentant une teneur en groupe acide carboxylique de 0,03 à 1,4 mmol/g, sur la base du poids sec des lignines lignosulfonates,
- un composant (ii) sous la forme d'un ou de plusieurs agents de réticulation.

2. Composition de liant à l'état solide selon la revendication 1, dans laquelle la composition de liant comprend en outre :
- un composant (iii) sous la forme d'un ou de plusieurs plastifiants.

3. Composition de liant à l'état solide selon l'une quelconque des revendications précédentes, dans laquelle la teneur en eau, calculée comme le poids d'eau par rapport au poids total de la composition de liant à l'état solide est ≤ 30 %, en particulier ≤ 25 %, et de préférence ≤ 10 %.

4. Composition de liant à l'état solide selon l'une quelconque des revendications précédentes, qui se présente sous forme de poudre et/ou dans laquelle 50% en poids des composants du liant à l'état solide ont une taille de particule inférieure à 500 µ, par exemple inférieure à 200 µ, par exemple inférieure à 100 µ et supérieure à 10 µ, par exemple supérieure à 20 µ, par exemple supérieure à 25 µ, la taille des particules étant déterminée par les méthodes divulguées dans la description.

5. Composition de liant à l'état solide selon l'une quelconque des revendications précédentes, dans laquelle le composant (i) présente une teneur en groupe acide carboxylique de 0,05 à 0,6 mmol/g, sur la base du poids sec des lignines lignosulfonates et/ou le composant (i) se présente sous la forme d'une ou de plusieurs lignines lignosulfonates présentant une teneur moyenne en groupe acide carboxylique inférieure à 1,8 groupe par macromolécule en tenant compte de la moyenne pondérale M_n du composant (i), par exemple inférieure à 1,4 par exemple inférieure à 1,1 par exemple inférieure à 0,7 par exemple inférieure à 0,4 et/ou
le composant (i) a une teneur en groupes OH phénoliques de 0,3 à 2,5 mmol/g, par exemple 0,5 à 2,0 mmol/g, par exemple 0,5 à 1,5 mmol/g sur la base du poids sec des lignines lignosulfonates et/ou le composant (i) a une teneur en groupes OH aliphatiques de 1,0 à 8,0 mmol/g, par exemple 1,5 à 6,0 mmol/g, par exemple 2,0 à 5,0 mmol/g, sur la base du poids sec des lignines lignosulfonates.

6. Composition de liant à l'état solide selon l'une quelconque des revendications précédentes, dans laquelle
le composant (i) comprend des lignosulfonates d'ammonium et/ou des lignosulfonates de calcium, et/ou des lignosulfonates de magnésium, et toute combinaison de ceux-ci, et/ou le composant (i) comprend des lignosulfonates d'ammonium et des lignosulfonates de calcium, dans laquelle le ratio molaire de NH₄⁺ sur Ca²⁺ est compris entre 5:1 et 1:5, en particulier entre 3:1 et 1:3, et/ou
la composition de liant contient du sucre ajouté en une quantité comprise entre 0 et moins de 5 % en poids, par rapport au poids du lignosulfonate et du sucre.

7. Composition de liant à l'état solide selon l'une quelconque des revendications précédentes, dans laquelle la composition de liant comprend
un composant (i) en une quantité de 50 à 98 % en poids, par exemple 65 à 98 % en poids, par exemple 80 à 98 % en poids, sur la base du poids sec des composants (i) et (ii) et/ou
un composant (ii) dans une quantité de 1 à 50 % en poids, par exemple 4 à 20 % en poids, par exemple 6 à 12 % en poids, sur la base du poids sec du composant (i) et/ou du composant (Hi) en une quantité de 0,5 à 50, de préférence de 2,5 à 25, plus préférablement de 3 à 15 % en poids, sur la base du poids sec du composant (i).

8. Composition de liant à l'état solide selon l'une quelconque des revendications précédentes, dans laquelle le composant (ii) se présente sous la forme d'un ou plusieurs agents de réticulation choisis parmi
a) les agents de réticulation β-hydroxyalkylamide et/ou les agents de réticulation oxazoline, et/ou
b) le groupe constitué d'amines organiques multifonctionnelles telles qu'une alcanolamine, de diamines telles que l'hexaméthyldiamine, de triamines, et/ou
c) de composés époxy présentant un poids moléculaire supérieur à 500, tels qu'un ou plusieurs oligomères ou polymères flexibles, par exemple un polymère à base d'acrylique à faible Tg, par exemple un polymère à base de vinyle à faible Tg, par exemple un polyéther à faible Tg, qui contient des groupes fonctionnels réactifs tels que des groupes carbodiimide, par exemple des groupes anhydride, par exemple des groupes oxazoline, par exemple des groupes amino, par exemple des groupes époxy, et/ou
d) un ou plusieurs agents de réticulation choisis dans le groupe constitué par la polyéthylène-imine, la polyvinylamine, les amines grasses ; et/ou
e) un ou plusieurs agents de réticulation sous forme d'amides gras ; et/ou
f) un ou plusieurs agents de réticulation choisis dans le groupe constitué par les aldéhydes aromatiques tels que l'hydroxybenzaldéhyde, l'aminobenzaldéhyde, l'hydroxy-méthoxybenzaldéhyde et/ou dans le groupe des aldéhydes aliphatiques tels que le décanal et/ou
g) un ou plusieurs agents de réticulation choisis parmi les polyester polyols, tels que le polycaprolactone ; et/ou
h) un ou plusieurs agents de réticulation choisis dans le groupe constitué par l'amidon, l'amidon modifié, le CMC ; et/ou
i) un ou plusieurs agents de réticulation sous forme de carbodiimides aliphatiques multifonctionnels ; et/ou
j) un ou plusieurs agents de réticulation choisis parmi les agents de réticulation à base de mélamine, tels que les agents de réticulation à base d'hexakis(méthylméthoxy)mélamine (HMMM).

9. Composition de liant à l'état solide selon l'une quelconque des revendications précédentes, dans laquelle le composant (H) comprend un ou plusieurs agents de réticulation choisis parmi
- des agents de réticulation β-hydroxyalkylamide, tels que des agents de réticulation N-(2-hydroxyisopropyl)amide, tels que des agents de réticulation N-(2-hydroxyéthyl)amide, tels que des agents de réticulation N-(2-hydroxyéthyl)adipamide, tels que des agents de réticulation N, N,N',N'-tétrakis(2-hydroxyéthyl)adipamide.

10. Composition de liant à l'état solide selon l'une quelconque des revendications précédentes, comprenant le composant (i) en une quantité de 25 à 95 % en poids, par exemple 30 à 90 % en poids, par exemple 35 à 85 % en poids, sur la base du poids sec de la composition de liant et/ou
le composant (ii) en une quantité de 2 à 90 % en poids, par exemple 6 à 60 % en poids, par exemple 10 à 40 % en poids, par exemple 25 à 40 % en poids, sur la base du poids sec du composant (i).

11. Composition de liant à l'état solide selon l'une quelconque des revendications précédentes, dans laquelle le composant (Hi) se présente sous la forme d'un ou plusieurs plastifiants choisis dans le groupe constitué par les polyéthylèneglycols, les éthers de polyéthylèneglycol, les polyéthers, les sucres hydrogénés, les phtalates et/ou acides, tels que l'acide adipique, l'acide vanillique, l'acide lactique et/ou l'acide férulique, les polymères acryliques, l'alcool polyvinylique, les dispersions de polyuréthane, le carbonate d'éthylène, le carbonate de propylène, les lactones, les lactames, les lactides, les polymères à base acrylique avec des groupes carboxy libres et/ou dispersions de polyuréthane avec des groupes carboxy libres, et/ou un ou plusieurs plastifiants choisis dans le groupe constitué par les alcools gras, les alcools monohydroxylés, tels que l'alcool stéarylique ; et/ou un ou plusieurs plastifiants choisis dans le groupe constitué d'alcoxylates tels que des éthoxylates, tels que des éthoxylates de butanol, tels que le butoxytriglycol ; et/ou un ou plusieurs plastifiants sous forme de propylèneglycols ; et/ou un ou plusieurs plastifiants sous forme d'esters de glycol ; et/ou
un ou plusieurs plastifiants choisis dans le groupe constitué par les adipates, les acétates, les benzoates, les cyclobenzoates, les citrates, les stéarates, les sorbates, les sébacates, les azélates, les butyrates, les valérates ; et/ou
un ou plusieurs plastifiants choisis dans le groupe constitué par les dérivés du phénol, tels que les phénols substitués par un groupe alkyle ou aryle ; et/ou
un ou plusieurs plastifiants choisis dans le groupe constitué par les silanols, les siloxanes ; et/ou
un ou plusieurs plastifiants choisis dans le groupe constitué par les sulfates tels que les alkylsulfates, les sulfonates tels que les alkylarylsulfonates tels que les alkyl- et/ou sulfonates, les phosphates tels que les tripolyphosphates ; et/ou
un ou plusieurs plastifiants sous forme d'hydroxyacides ; et/ou
un ou plusieurs plastifiants choisis dans le groupe constitué par les amides monomères, tels que les acétamides, les benzamides, les amides d'acides gras tels que les amides d'huile de tall ; et/ou
un ou plusieurs plastifiants choisis dans le groupe constitué par les composés d'ammonium quaternaire tels que la triméthylglycine, le chlorure de distéaryldiméthylammonium ; et/ou
un ou plusieurs plastifiants choisis parmi les esters méthyliques d'acides ; et/ou
un ou plusieurs plastifiants choisis dans le groupe constitué par les alkylpolyglucosides, les gluconamides, les aminoglucoseamides, les esters de saccharose, les esters de sorbitane ; et/ou
un ou plusieurs plastifiants choisis parmi le groupe constitué de polyéthylène glycols, d'éthers de polyéthylène glycol et/ou
un ou plusieurs plastifiants présentant un point d'ébullition compris entre 100 et 380 °C, de préférence entre 120 et 300 °C, plus préférentiellement entre 140 et 250 °C et/ou
un ou plusieurs polyéthylène glycols présentant un poids moléculaire moyen de 150 à 50 000 g/mol, en particulier de 600 à 10.000 g/mol, plus particulièrement de 1 000 à 4 000 g/mol.

12. Composition de liant à l'état solide selon l'une quelconque des revendications précédentes, comprenant en outre :
- un composant (iv) sous la forme d'un ou plusieurs agents de couplage, tels que des silanes organofonctionnels, et/ou
- un composant (v) sous la forme d'un ou plusieurs composants choisis dans le groupe des bases, en particulier des amines ou leurs sels, et/ou
- un composant sous forme d'urée, en particulier en une quantité de 5 à 40 % en poids, telle que 10 à 30 % en poids, telle que 15 à 25 % en poids, par rapport au poids sec du composant (i) et/ou
- un composant (vi) sous la forme d'une ou plusieurs silicones réactives ou non réactives.

13. Procédé de fabrication d'un produit à base de fibres minérales liées, qui comprend les étapes consistant à mettre en contact les fibres minérales avec une composition de liant à l'état solide selon l'une quelconque des revendications 1 à 12, et à faire durcir la composition de liant en contact avec les fibres minérales.

14. Procédé selon la revendication 13, dans lequel le durcissement de la composition de liant à l'état solide en contact avec les fibres minérales a lieu dans une presse à chaud et/ou le durcissement de la composition liante à l'état solide en contact avec les fibres minérales intervient à une température de 150 à 300 °C, de préférence de 170 à 250 °C, en particulier entre 190 et 230 °C.

15. Utilisation d'une composition de liant à l'état solide selon l'une quelconque des revendications 1 à 14 comme liant pour fibres minérales ou comme colle pour coller des composants les uns aux autres, de préférence comme colle pour coller un matériau en feuille tel qu'un non-tissé ou une feuille sur un produit en laine de roche.
